# EUROPEAN PATENT APPLICATION

(11) **EP 4 632 560 A1**
(43) Date of publication of application: **15.10.2025**
(21) Application number: 25168717.4
(22) Date of filing: 05.04.2025
(51) Int. Cl.: G06F 8/41

(54) **BURST PROCESSING**

(30) Priority: 08.04.2024 GB 202404989
(71) Applicant: Imagination Technologies Limited, Kings Langley, Hertfordshire WD4 8LZ (GB)
(72) Inventor: DEMEURE, Aroun, Kings Langley, Hertfordshire WD4 8LZ (GB); THOMAS, William, Kings Langley, Hertfordshire WD4 8LZ (GB); LEWSEY, David, Kings Langley, Hertfordshire WD4 8LZ (GB); SHEPPARD, Mark, Kings Langley, Hertfordshire WD4 8LZ (GB)
(74) Representative: CMS Cameron McKenna Nabarro Olswang LLP

(57) **Abstract**

A computer-implemented method of compiling a program is described. The method comprises: analysing a program to identify at least one group of instructions within the program that can be executed atomically; in response to identifying a group of instructions that can be executed atomically, extracting the group of instructions from the program to form a burst; creating a modified program by inserting an instruction into the program in place of the extracted group of instructions, wherein the instruction is configured to trigger execution of the burst; and saving the burst and the modified program separately.

## Description

### CROSS-REFERENCE TO RELATED APPLICATION

This application claims priority from UK patent application GB 2404989.2 filed on 8 April 2024, which is herein incorporated by reference in its entirety.

### TECHNICAL FIELD

The invention relates to scheduling methods within a GPU (graphics processing unit) in which bursts of instructions are extracted from a program so that they can be scheduled and executed separately. The invention also relates to GPU hardware that is designed to execute these bursts of instructions.

### BACKGROUND

Register files in a GPU are used to store operands for the operations executed by the execution cores (e.g. by the arithmetic logic units, ALUs within a shader core). These register files are implemented in SRAMs (static random access memories) within the GPU that are more power and area efficient than the DRAMs (dynamic random access memories) which are used as main memory (e.g. off-chip memory). A GPU requires a large capacity of register files in order to support a large number of parallel threads. The GPU switches between threads that are running when the thread cannot progress for some reason (e.g. due to a delay while a memory access is performed) but this requires that data is saved to the register files at the end of every instruction.

The embodiments described below are provided by way of example only and are not limiting of implementations which solve any or all of the disadvantages of known GPU hardware and GPU scheduling methods.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A computer-implemented method of compiling a program is described. The method comprises: analysing a program to identify at least one group of instructions within the program that can be executed atomically; in response to identifying a group of instructions that can be executed atomically, extracting the group of instructions from the program to form a burst; creating a modified program by inserting an instruction into the program in place of the extracted group of instructions, wherein the instruction is configured to trigger execution of the burst; and saving the burst and the modified program separately.

A first aspect provides a computer-implemented method of compiling a program comprising: analysing a program to identify at least one group of instructions within the program that can be executed atomically; in response to identifying a group of instructions that can be executed atomically, extracting the group of instructions from the program to form a burst; creating a modified program by inserting an instruction into the program in place of the extracted group of instructions, wherein the instruction is configured to trigger execution of the burst; and saving the burst and the modified program separately.

A second aspect provides a computer system for compiling a program to form a burst and a modified program, the computer system comprising: a processor; and a memory arranged to store computer executable instructions that, when executed, cause the computer system to execute the method of the first aspect.

A third aspect provides a GPU comprising a shader core, the shader core comprising: a main processing portion comprising a scheduler, an instruction cache, a plurality of registers and a plurality of ALUs; and a sub-processor that operates independently of the main processing portion, the sub-processor comprising a burst scheduler, a plurality of registers and a plurality of ALUs, wherein the sub-processor is arranged to execute bursts, wherein a burst comprises at least one group of instructions that can be executed atomically and which are extracted from a program, the main processing portion executes a modified version of the program, wherein the modified program is created from the program by replacing the instructions in a burst with an instruction that triggers the execution of the burst and the registers in the sub-processor are used to store one or more sources and/or results for bursts that are being executed by the sub-processor.

A fourth aspect provides a method of executing a program on a GPU, wherein the program is split into a modified program and a burst, wherein the burst comprises at least one group of instructions which can be executed atomically and which are extracted from the program and replaced by a trigger instruction to form the modified program, the method comprising: executing the modified program by a main processing portion of a shader core in the GPU; in response to encountering a trigger instruction for the burst, fetching the burst instructions; and triggering a sub-processor in the GPU to execute the burst, wherein the sub-processor operates independently of the main processing portion of the shader core.

The GPU may be embodied in hardware on an integrated circuit. There may be provided a method of manufacturing, at an integrated circuit manufacturing system, a GPU. There may be provided an integrated circuit definition dataset that, when processed in an integrated circuit manufacturing system, configures the system to manufacture a GPU. There may be provided a non-transitory computer readable storage medium having stored thereon a computer readable description of a GPU that, when processed in an integrated circuit manufacturing system, causes the integrated circuit manufacturing system to manufacture an integrated circuit embodying a GPU.

There may be provided an integrated circuit manufacturing system comprising: a non-transitory computer readable storage medium having stored thereon a computer readable description of the GPU; a layout processing system configured to process the computer readable description so as to generate a circuit layout description of an integrated circuit embodying the GPU; and an integrated circuit generation system configured to manufacture the GPU according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows a schematic diagram of a first example GPU;
Figure 2 is a flow diagram of a first example method of operating a GPU as described herein;
Figure 3 is a flow diagram of a method of operation of a compiler;
Figure 4 shows a schematic diagram of a second example GPU;
Figures 5A and 5B show a flow diagram of a second example method of operation of a GPU as described herein;
Figures 6 and 7 show schematic diagrams of two further example sub-processors;
Figure 8 shows a computer system in which a GPU including sub-processor as described herein is implemented; and
Figure 9 shows an integrated circuit manufacturing system for generating an integrated circuit embodying a GPU including a sub-processor as described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, GPUs require high capacity register files in order to be able to support a large number of parallel threads. This large number of parallel threads are needed to hide both internal and external memory latency. Whilst SRAMs used to implement the register files have always required a large area of hardware, because of the large capacity, the SRAMs are increasingly taking up a larger proportion of the chip area and power draw because SRAM is not scaling as efficiently as logic with recent process developments (i.e. on the latest process nodes). As a result, the power used when reading and writing to the register files can be a significant fraction of the power consumed within a shader core of a GPU. Additionally, as these SRAMs are typically placed around the perimeter of the layout block, this further increases the power used for each read/write.

Described herein are methods and hardware that result in a more efficient implementation of register files through the modification of a program (e.g. a shader program) to extract at least one group of instructions that can be executed atomically and the provision of a separate sub-processor within the GPU that executes the extracted group of instructions independently of the remainder of the program. The phrase 'executed atomically' is used herein to mean that the group of instructions do not have any external dependencies which need resolving during execution of the instructions in the group (i.e. there are no circular dependencies). A separate dedicated set of registers is provided within the sub-processor for use when executing the extracted instructions and these dedicated registers are used to store some or all of the sources and/or results for the instructions in the extracted group of instructions.

By extracting at least one group of instructions that can be executed atomically from a program and then executing them within a separate sub-processor, it reduces the rate of accesses to the SRAM within the main processing part of the shader core, because results that are only used within the extracted group of instructions do not need to be stored externally to the sub-processor. This leaves more bandwidth for use by other pipelines to read from or write to the SRAM and reduces the risk of bank clashes (i.e. where there are two concurrent reads for different registers from the same bank in the large SRAM-based register file). Only a small number of registers is required within the sub-processor because of the atomic execution of bursts, i.e. because once execution of a burst begins, it cannot be descheduled and will continue to execute until completion, and because there is a limited number of active (i.e. inflight) bursts at any point in time. Additionally, the working state, which is stored in these registers is typically much smaller than the working state for the entire unmodified program. The dedicated set of registers is located within the sub-processor (i.e. close to the arithmetic logic units, ALUs, within the sub-processor). This reduces the total power consumed by register reads and writes and may also provide performance benefits, e.g. as a consequence of freeing bandwidth (as described above) and reduced latency (because the round-trip to fetch/execute/writeback through the dedicated set of registers is shorter). Using the methods described herein it may be possible to reduce size of the required register files (and hence SRAM) within the main processing part of the shader core in the GPU, i.e. within the part of the shader core that executes the remainder of the program (after extraction of the group of instructions). This is because results that are only used within the extracted group of instructions do not need to be stored externally to the sub-processor.

The extracted group of instructions may comprise interdependent instructions that can be executed atomically, i.e. if all the instructions in the extracted group were merged into a single node in the control flow graph for the program, it would not introduce a circular dependency within the control flow graph. Instructions are considered interdependent if they share data, e.g. instructions A and B are interdependent if instruction B consumes data generated by instruction A, instructions C, D and E are interdependent if instructions D and E both consume data generated by instruction C, etc. In some examples, the extracted group of instructions may comprise more than one group of interdependent instructions, where each group of interdependent instructions is independent of the other groups of interdependent instructions in the same extracted group of instructions. This merging of groups of interdependent instructions into the same group of extracted instructions may be performed to reduce the number of separate groups that are extracted from a single program. Where groups are merged, the criteria that the instructions can be executed atomically (i.e. if all the instructions in the extracted group were merged into a single node in the control flow graph for the program, it would not introduce a circular dependency within the control flow graph) is satisfied for the merged groups (i.e. for the resultant extracted group of instructions after merging).

The extracted group of instructions may be referred to as a 'burst' and the instructions within the group may be referred to as 'burst instructions'. The instructions may be arithmetic instructions (e.g. floating-point operations and/or integer dot-product operations) or they may be other types of instructions that have a similarly low and predictable latency (e.g. of the order of a few cycles, e.g. 2-3 cycles). This low latency of the burst instructions means that the latency of each instruction can be hidden using a combination of one or more of: issue cycles used by another active burst, instructing scheduling within the burst and programmable stalls, as described in more detail below. The predictable latency of the burst instructions means that the compiler can optimally schedule the burst instructions, as described in more detail below. Other instruction types that may be included in a burst include instructions that do not modify control flow state and do not access memories where high and/or variable latency may be incurred due or arbitration or cache misses, for example bitshifts or bitwise operations, moves and conditional move operations.

The execution of the burst is triggered by a new instruction that is inserted into the modified program (i.e. in place of the extracted burst instructions). This new instruction may be referred to as an 'arithmetic burst control (ABC) instruction'. After the triggering of a burst by the execution of an ABC instruction within the modified program, a burst can only be executed (i.e. become an active burst) if all the pre-requisites are met, including that the data dependencies for each instruction in the burst are satisfied, and there is capacity within the sub-processor to start execution of a new burst (i.e. the number of active bursts is less than the maximum number). Otherwise, the burst will be placed into a burst queue within the sub-processor. The registers within the sub-processor that are used to store some or all of the sources and/or results for a burst that is executing (i.e. an active burst) may be referred to as 'active burst registers' (ABRs). These ABRs are ephemeral scratch registers that are logically invalidated at the end of each burst.

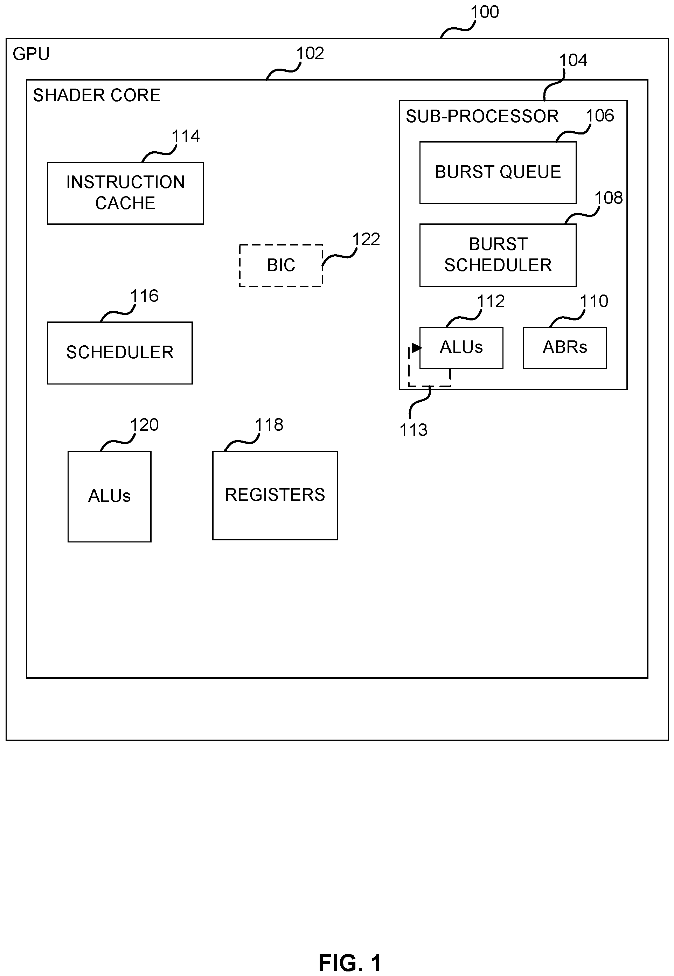

Figure 1 shows a first example GPU 100 as described herein. The GPU 100 comprises a shader core 102 and the shader core 102 comprises a sub-processor 104 arranged to execute bursts of instructions extracted from a program (e.g. a shader program) as described above. The sub-processor 104 comprises a burst queue 106, a burst scheduler 108, a plurality of ABRs 110 and a plurality of ALUs 112. The main processing part of the shader core 102 (i.e. the part of the shader core 102 that is not the sub-processor 104) comprises an instruction cache 114, a scheduler 116, a plurality of registers 118 and a plurality of ALUs 120. It will be appreciated that the GPU 100, the shader core 102 and the sub-processor 104 may comprise other elements not shown in Figure 1.

The sub-processor 104 may also include forwarding paths 113 from the output of the ALUs to the input of the ALUs. The forwarding paths carry the result generated by one instruction (the producing instruction) executed by the ALU directly to the input of the ALU so that the result can be used as an input to a subsequent instruction (the consuming instruction). This avoids the need for the consuming instruction to read the result (which may be referred to as an 'intermediate value') from an ABR and may also avoid the need to write the intermediate value to an ABR (e.g. where the consuming instruction is the only consumer or the result and there is no risk of stalling). The forwarding paths 113 may be configured to enable the output of any of the ALUs 112 to be provided directly as an input to the same ALU or to any other of the ALUs 112 or the forwarding may be more restricted (e.g. from the output of one ALU to the input of the same ALU only, or of a proper subset of the ALUs, and not to the input of other ALUs). Through the use of forwarding, power and bandwidth are saved through the reduction of a read (and in some examples, also a write) and reduces latency by providing a faster method of communication between instructions than a write followed by a read.

The ABRs 110 may be flip-flop based registers instead of SRAM based registers which improves power efficiency. Whilst flip-flop based registers are typically less area efficient than SRAM based registers for large numbers of registers, for small numbers of registers any additional area cost is small and outweighed by the power efficiency gains. Only a small number of registers are required within the sub-processor to store sources and/or results for an active burst because of the atomic execution, limited number of active bursts, and reduced size of the working state, as described above. These flip-flop based registers (i.e. flip-flop based ABRs) may be positioned locally to the ALUs and this results in a further increase in power efficiency compared to using SRAMs as well as a potential reduction in latency (because the round-trip to fetch/execute/writeback through ABRs is shorter). Through the use of a combination of a high-capacity arrangement of SRAM based registers 118 for the remaining instructions of the program and a much smaller number of flip-flop based registers in the sub-processor (ABRs 110), the overall efficiency of the GPU in terms of both power and area is improved.

The GPU 100 may comprise a separate instruction cache, referred to herein as a 'burst instruction cache' (BIC) 122 that is used to store the fetched burst instructions prior to execution of a burst (i.e. prior to a burst becoming active). The instruction lines in the BIC 122 that store the burst instructions, or that are allocated to the burst instructions in advance of them being fetched, are locked so that they cannot be evicted until execution of the burst has completed. Use of a separate instruction cache 122 (i.e. separate from the main instruction cache 114 within the main processing part of the shader core) for burst instructions ensures that pre-fetched burst instructions for an active burst will always be in the cache when they are required (e.g. to be decoded) without requiring implementation of a complex mechanism to lock lines in the main instruction cache that store burst instructions. As the BIC 122 only stores burst instructions, implementing a locking mechanism for the burst instructions is less complex than in the main instruction cache 114. Without the locking mechanism (in the BIC 122 or main instruction cache 114), a cache-miss could occur mid-burst, which would result in an active burst being stalled for hundreds of cycles, whilst the instruction is fetched from main memory (which is external to the GPU 100 shown in Figure 1), and reduce the utilisation of the ALUs 112 within the sub-processor 104. Additionally, by having both a BIC 122 and a regular instruction cache 114, this enables burst instructions and instructions from the remainder of the program to be fetched simultaneously. Whilst FIG. 1 shows the BIC 122 external to the sub-processor 104, it may alternatively be considered to be part of the sub-processor 104.

As described above, bursts are extracted from the program (e.g. the shader program) and their execution is triggered by an ABC instruction that is inserted into the program in place of the extracted burst instructions. A sub-processor may comprise a single set of ABRs or more than one set of ABRs 110. Where a sub-processor comprises multiple sets of ABRs, this allows the working data for multiple bursts to be retained (i.e. one burst per set of ABRs). A sub-processor 104 may comprise B dedicated sets of ABRs 110 (where B is an integer and may be equal to one or may be a small number, such as two), each set of ABRs 110 being dedicated to a different burst, and hence be able to execute B bursts concurrently. In other examples, B may have a different value e.g. 4, 10, 20, etc. There is consequently a limited pool of active bursts (i.e. bursts that are currently executing), B bursts, from which instructions can be scheduled within the sub-processor 104. Where the sub-processor supports more than one active burst (i.e. where B>1), latency within the ALU pipelines 112 can be hidden by interleaving instructions from different active bursts within the sub-processor (e.g. by the burst scheduler 108). Interleaving also provides additional opportunities for forwarding (e.g. by interleaving instructions from other active bursts so that the result generated by the producing instruction is received at the input of the ALU at the right time for execution of the consuming instruction).

As described above, the ABC instruction that is inserted into the modified program, triggers execution of the burst, if there is capacity in the sub-processor, or if not, the addition of the burst to the burst queue 106. In addition, the ABC instruction may include one or more bits that control the arithmetic behaviour of the sub-processor and these bits may be referred to as control bits. For example, these control bits in the ABC instruction may set the rounding mode, denormal mode, half-precision encoding format, etc. for the sub-processor when executing the burst. This enables different settings to be used for different bursts and so enables the arithmetic behaviour of the sub-processor to be controlled on a per-burst basis. The control bits may be set by the compiler when inserting the ABC instruction.

One or more bursts may be extracted from a single program, such that the resulting modified program includes one or more ABC instructions, each ABC instruction corresponding to (and hence triggering) a different one of the extracted bursts. Where bursts are independent of each other, a sub-processor may execute multiple bursts from the same instance of the program (i.e. from the same thread) at the same time or multiple bursts from different programs or multiple bursts from different instances of the same program (where the different instances are executed on different threads) or any combination thereof, subject to the limit on the number of active bursts that the sub-processor 104 can accommodate, as described above. Where bursts are not independent of each other, fences may be used to synchronise their execution, as described below.

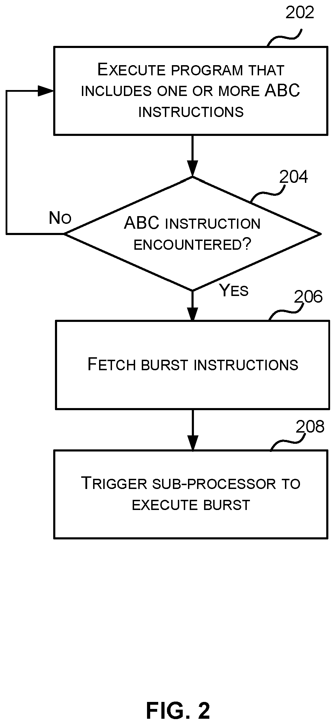

Figure 2 is a flow diagram of a first example method of operating a GPU, such as the GPU 100 shown in Figure 1. The GPU 100, and in particular the shader core 102, executes a program (e.g. a shader program) that includes one or more ABC instructions (block 202). When an ABC instruction is encountered within the program (i.e. fetched and decoded by the main processing part of the shader core, 'Yes' in block 204), the burst instructions corresponding to the ABC instruction are fetched (block 206). These burst instructions are stored separately in memory from the main instruction stream (i.e. from the instructions in the program being executed in block 202). Once fetched (in block 206), the burst instructions are stored in the instruction cache 114 or in a dedicated BIC 122 where provided and the sub-processor 104 is triggered to execute the burst (block 208). This does not mean that the burst is executed straight away, because the sub-processor 104 may already be at the maximum number of active bursts, in which case the burst is added to the burst queue 106.

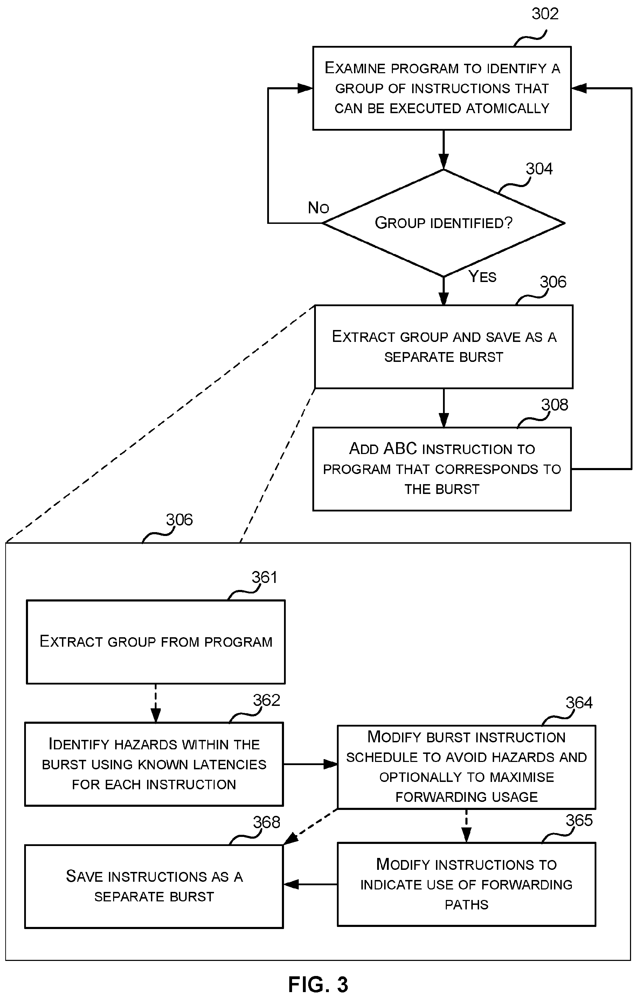

The extraction of the burst instructions from a program may be performed at compile time by a compiler. Figure 3 is a flow diagram of a method of operation of a compiler. The compiler examines a program (e.g. a shader program) as part of the compilation operation to identify any group of instructions in the program that can be executed atomically (block 302). As detailed above, this means that if all the instructions in the extracted group were merged into a single node in the control flow graph for the program, it would not introduce a circular dependency within the control flow graph. If such a group is identified ('Yes' in block 304), the group of instructions are extracted from the program and saved separately as a burst (block 306) and an ABC instruction is added to the program (which may be referred to herein as the 'modified program' or 'main program' to distinguish it from both the original, unmodified program and the burst) in place of the extracted instructions (block 308). In some examples, multiple groups of instructions that can be executed atomically may be extracted from a program and merged into a single burst (in block 306).

The instructions within a burst may comprise a single class of instructions (e.g. scalar and vector floating-point operations or 8-bit integer dot-product operations) or may comprise a mixture of classes of instructions, dependent upon the classes of instructions supported by the sub-processor. This is dependent upon the types of ALUs that are contained within the sub-processor e.g. as the ALUs within the sub-processor must be capable of executing the classes of instructions within a burst. Having bursts that comprise more than one class of instructions assists in finding instruction-level parallelism to feed the ALUs from a small number of bursts. Whilst Figure 1 shows a shader core 102 comprising a single sub-processor 104, in other examples a shader core may comprise more than one sub-processor and each sub-processor may support the same or different classes of instructions. Other types of instructions (e.g. instructions of classes that are not supported by the sub-processor) are not included within a burst and remain within the modified program.

As noted above, more than one burst may be extracted from a program and each inserted ABC instruction that is inserted corresponds to the extracted instructions that it replaces within the program. The ABC instruction comprises data that identifies the location of the instructions that form the burst. For example, the ABC instruction may specify the start address or Program Counter for the burst (e.g. as a relative offset to the ABC instruction itself) and the length of the burst (e.g. the number of DWORDs or the ending DWORD). The ABC instruction may also include a start offset and an end offset which defines where the instructions can be found within a BIC cache line (e.g. where a cache line may contain instructions for more than one burst and hence the instructions do not necessarily start at the beginning of a cache line or end at the end of a cache line).

As described above, the ABC instruction that is added (in block 308) may comprise one or more control bits that control or configure the arithmetic behaviour of the sub-processor when executing the burst. For example, these control bits in the ABC instruction may set the rounding mode, denormal mode, half-precision encoding format, etc. for the sub-processor when executing the burst. This enables different settings to be used for different bursts and so enables the arithmetic behaviour of the sub-processor to be controlled on a per-burst basis.

The ABC instruction may comprise data identifying one or more fence counters, corresponding to one or more data fences, that are incremented when a burst is received by the sub-processor (e.g. when it is added to the burst queue or when it starts executing if it skips the burst queue). Fences may be used for synchronisation where an instruction inside a burst needs to communicate with an instruction that is outside the burst (e.g. in the modified program or another burst extracted from the same program). For example, where a burst produces data that is subsequently consumed by an instruction outside of the burst, the ABC instruction identifies a fence counter (corresponding to a data fence) that is incremented when the burst is received by the sub-processor and the consuming instruction must wait on the fence counter being decremented to zero before it can execute.

Where the ABC instruction specifies one or more fence counters that are incremented when the burst is received by the sub-processor, the compiler also adds the data fences into the modified program (i.e. it modifies one or more instructions in the modified program to cause them to wait until a fence counter is decremented to zero) and modifies one or more instructions within the burst to decrement the fence counter. Some or all of the instructions in the burst may have the option to decrement a fence counter for a single data fence, and where data fences are used, the last instruction in a burst will usually decrement a fence counter. By supporting multiple data fences in this way, this provides fine-grained synchronization points and enables instructions from the burst to efficiently execute in parallel with instructions from the modified program (as issued by the main scheduler 116). For example, a texture instruction (which is part of the modified program) may depend upon the third instruction in a burst of 20 instructions, so the burst instructions may be set to initially increment fence counters for two data fences and then decrement one on instruction 3 and the other on instruction 20. By decrementing the first fence counter on instruction 3 (the producing instruction), the texture instruction of the modified program (the consuming instruction) can proceed before the completion of the burst (i.e. once the first fence counter has decremented to zero). Otherwise, if only a single fence counter was used and this fence counter was only decremented at the end of the burst, it would block dependent instructions for an unnecessarily long time, starving the shader core of work and increasing shader latency. Where it is known when a write completes (i.e. the datapath is non-stallable), the fence counter decrement for that instruction may happen earlier (i.e. ahead of the write instruction). To determine when the fence counter can be safely decremented, the time to complete the write is compared to the minimum latency from the decrement to the consuming instruction pipeline's read and this difference is used to determine whether and by how much, the fence counter decrement can precede the write instruction.

Where there is more than one burst that is extracted from a single program, fences may also be used to control dependencies between bursts (e.g. in a similar manner to dependencies between a burst and the modified program). However, the ABC instruction must wait for all fences required to satisfy dependencies for any instruction in the burst (i.e. there is no fine grained fence waiting between bursts).

There are also other reasons why the compiler may add fences into the modified program. For example, where a burst consumes data produced outside the burst (e.g. produced by the modified program), the compiler may add fences into the modified program to ensure that the ABC instruction is not executed by the sub-processor until these dependencies are resolved and the data is available. This is one of the ways that the methods described herein can ensure that once execution of a burst is triggered, the sub-processor is guaranteed to execute the entire burst without having to stall for an external dependency.

As well as adding an ABC instruction to the modified program (in block 308), the compiler may also analyse the burst instructions (i.e. the instructions within a burst) and reorder instructions and/or insert stalls (i.e. no operations, NOPs) to avoid hazards. As also shown in Figure 3, having extracted the group of instructions from the modified program (block 361), the compiler may analyse the group of instructions to identify one or more hazards (block 362). For example, a hazard may occur if a write from one instruction within a burst does not complete before the result is read by another instruction in the same burst. These hazards may be dependent upon the latencies of each instruction within the burst and the scheduling scheme used within the sub-processor (where there is more than one burst active at any time) and whilst these latencies may vary between instructions, they are known (e.g. an instruction that requires floating-point conversion incurs an extra cycle of latency and an instruction that reads from the registers 118 outside the sub-processor incurs an additional predetermined number of cycles of latency) or if variable, the worst-case latencies are known. To address the hazards, the compiler modifies the burst instruction schedule (block 364). This modification may comprise reordering instructions within the burst (e.g. to insert another instruction between the instruction that generates a result and the instruction that takes the result as an input). Where it is not possible to avoid a hazard by reordering instructions within a burst, the compiler may insert stalls, e.g. using fields of the reading instruction. These fields generate a specified number of NOPs before the reading instruction is issued, allowing time for the write to complete. The compiler may also insert stalls to resolve hazards with other register stores (e.g. with the registers 118 in the main processing part of the shader core). For example, an instruction in a burst may write to the registers 118 external to the sub-processor (e.g. because the result is subsequently used by instructions in the modified program) and a later instruction in the burst may read the same value (e.g. where, in a long burst, there are insufficient ABRs to store all the results or where there are a pair of values packed into a single register, where one value is produced inside the burst and the other is produced outside, before being read as a pair inside the burst). Having modified the burst instruction schedule to avoid hazards, the compiler saves the resulting instructions as a burst, separate from the modified program (block 368).

Using the method described above, the compiler may not be able to avoid all hazards, in which case the remaining hazards may be detected by the hardware (e.g. within the GPU or more specifically within the sub-processor) and addressed as part of the scheduling process (e.g. by the burst scheduler 108). In addition, or instead, the sub-processor may detect where a burst instruction operand read clashes with writeback for a previous burst instruction write and will stall the reading instruction.

When modifying the burst instruction schedule to address hazards (in block364), the compiler may also seek to increase (or maximise) the possibility of forwarding within a burst. As shown in Figure 3, the compiler then modifies the relevant instruction fields in those instructions where forwarding is possible, to indicate that the hardware should use the forwarding paths 113 within the sub-processor for reading one or more operands (block 365). Where it is guaranteed that the burst cannot stall, as well as adding in the forwarding paths, the compiler can modify the producing instruction so that the result is never written to an ABR. If there is a possibility that the burst could stall, an ABR is provided for relevant destination/sources as a precaution and the write may be performed always or only in the event of a stall. If at runtime forwarding is possible, power is saved at least through the omission of a read from the ABR and in some cases also through the omission of the write to an ABR. For example, the compiler may modify burst instructions to set a 'forwarding bit' in an instruction to indicate that forwarding is possible for a particular source. The sub-processor hardware can then read the forwarding bit(s) and assuming the instruction is not stalled (e.g. due to a bank clash), it can read the indicated sources from the forwarding paths.

Longer bursts, i.e. bursts containing more instructions, result in more savings in registers in the main processing part of the shader core because more values become intermediate values that only exist within a burst and so never need to be written out to these registers; however, longer bursts require that larger sections of the BIC 122 are locked. There may be a limit on the number of instructions that can fit into the locked lines within the BIC 122. Another limitation on the length of a burst is the requirement that circular dependencies within the control flow graph are not introduced (as described above). The number of ABRs does not impose a hard limit on the maximum burst length; however, if the burst is very large and there are only a few ABRs, it may result in an increase in the stalling of the ALUs which reduces overall efficiency.

The compiler may construct bursts to maximise data reuse (i.e. through the use of forwarding and/or ABRs) and then order the operations within the burst to first maximise forwarding (and therefore avoid NOPs) and then to maximise the potential use of ABRs. Small, unrelated bursts (i.e. independent bursts) may also be merged even though there is no reuse of data. This improves utilisation, reduces shader latency, reduces power consumption and improves overall performance.

In other examples, the compiler may construct bursts according to one or more of the following criteria (in order of priority): (1) minimise the number of NOPs, (2) maximise the use of the forwarding path, (3) maximise the use of ABRs to store results that are then read by subsequent instructions when the forwarding path cannot be used, and (4) maximise the use of ABRs to store operands that are used by multiple instructions within a burst to reduce reads from the registers outside the sub-processor. Minimising the number of NOPs reduces the number of cycles where the ALUs cannot be utilised and therefore improves utilisation. Use of the forwarding path minimises the latency between dependent instructions, which can reduce shader latency and improve overall performance in ALU-limited workloads. Aiming to use the ABRs (points 3 and 4) instead of accessing the registers outside the sub-processor reduces power.

Each burst may comprise any number of instructions (e.g. subject to the constraints detailed above). In some examples, all instructions of a particular class (e.g. all floating-point operations) may be extracted from the original, unmodified program and placed into bursts. This simplifies the design of the hardware as it is not necessary to enable to same class of instruction to be executed by both the main processing part of the shader core and the sub-processor. As described above, a sub-processor may execute a single class of instructions or multiple classes of instructions (such that a burst can comprise a single class of instructions or multiple classes of instructions) and a shader core may comprise one or more sub-processors. Where a shader core comprises a plurality of sub-processors, the sub-processors within the shader core may be different (e.g. such that different sub-processors execute different classes of instruction) or the same. In an example, a sub-processor may execute both floating-point and 8-bit integer dot product operations.

Where a burst comprises multiple classes of instruction (e.g. both floating-point operations and integer dot product operations), the sub-processor may be capable of decoding one instruction of each class in parallel, thereby enabling dynamic multi-issue of instructions within the sub-processor.

It will be appreciated that Figure 3 shows only a subset of the operations performed by a compiler. For example, the compiler may control the allocation of ABRs to burst instructions and this is described below. The compiler may also add scheduling hints into a burst (e.g. to indicate to the burst scheduler when it might be useful to deviate from its standard scheduling scheme). The compiler may combine unrelated bursts into a single burst (as described above) to reduce the total number of bursts. In some examples, the compiler may determine that the same burst can be reused in different places within the modified program and this may reduce cache thrashing (of the BIC) and improve cache usage (of the BIC).

In some examples, the compiler may intelligently pack bursts into cache lines to reduce cache thrashing (of the BIC) and improve cache usage (of the BIC). For example, where there are multiple (e.g. two) bursts, each requiring only part of a cache line (in the BIC) to store its instructions, the compiler may pack the instructions for two or more of the bursts into the same cache line. In such examples, the ABC instructions point to the same address (i.e. to the same cache line) but each ABC instruction includes a start and end offset that identifies where the instructions for a particular burst can be found within a BIC cache line. By packing burst instructions for more than one burst into the same cache line, it means that the when the first burst executes, the requisite data to populate the entire cache line is fetched and stored in the BIC. Consequently, when the second burst executes, it is likely that the burst instructions are already stored in the BIC. Lock counters within the BIC (which implement the locking of cache lines within the BIC) are used to ensure that the cache line cannot be evicted until all the active (i.e. inflight) bursts for which it contains instructions have been executed. Lock counters are incremented when an ABC instruction is encountered (i.e. in blocks 512 and 510) and decremented when the last instruction of the corresponding burst is read out (in block 524, e.g. following block 582). When selecting bursts to combine into a single cache line, the compiler may select related bursts (e.g. bursts that are independent but are issued back to back) to reduce instruction fetch demand compared to if they were on separate cache lines.

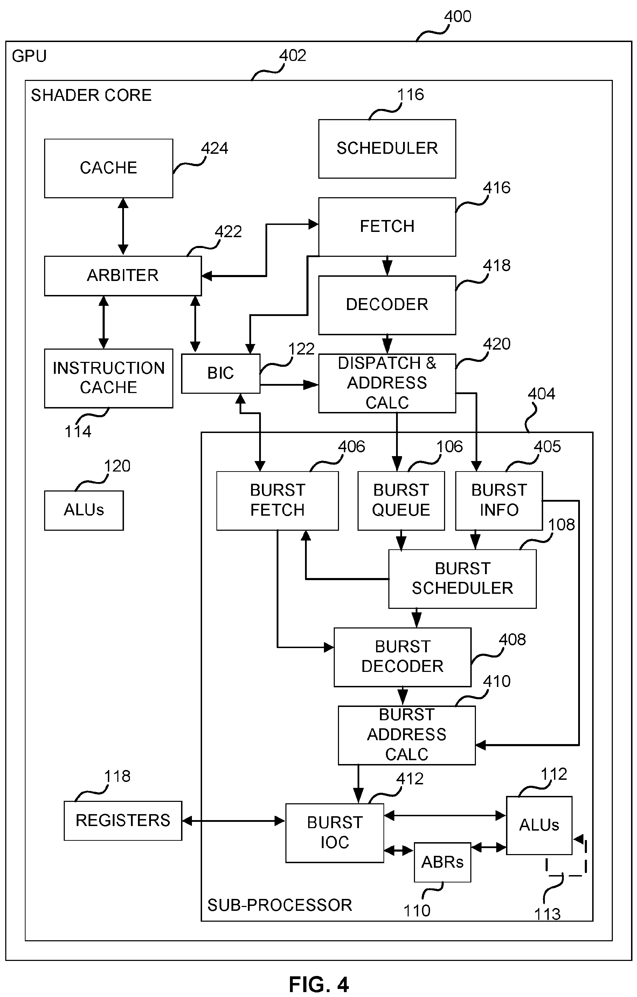

Figure 4 shows a second example GPU 400 as described herein. The GPU 400 comprises a shader core 402 and the shader core 402 comprises a sub-processor 404 arranged to execute bursts of instructions extracted from a program (e.g. a shader program) as described above. The GPU 400 shown in Figure 4 is a variation on the GPU 100 shown in Figure 1 and described above.

The sub-processor 404 comprises a burst queue 106, a burst scheduler 108, a plurality of ABRs 110 and a plurality of ALUs 112. Forwarding paths 113 are provided within the sub-processor 404 from the output of the ALUs to the input of the ALUs. The sub-processor 404 also comprises a burst information store 405, a burst fetch unit 406, a burst decoder 408, a burst address calculation unit 410 and a burst input-output controller (IOC) 412. The burst information store 405, which stores metadata for the bursts, may be a flip-flop based storage area (e.g. similar to the ABRs). This is more power efficient than using SRAMs because different sections of the burst information (as stored in the burst information store 405) are used at different points in the pipeline and so the burst information store 405 may comprise multiple portions of flip-flop based storage located close to where the stored data is used. The burst queue 106 comprises a chronologically ordered list of all the bursts (e.g. in the form of their burst IDs) that have been issued (i.e. are ready to execute) but have not yet been executed. The burst queue 106 may be implemented as a FIFO and when a burst is popped from the burst queue 106 it becomes an active burst. In other examples, the burst queue 106 may be implemented as an out-of-order hazard queue (where entries specify any possible hazards between entries) waiting on fences before the first instruction in a burst. Burst issue logic may be used to detect hazard free bursts from any point in the queue and issue them when an active burst entry is free. The burst address calculation unit 410 translates logical register addresses to physical memory addresses where registers are dynamically allocated (e.g. temp registers).

The main processing part of the shader core 402 (i.e. the part of the shader core 402 that is not the sub-processor 404) comprises an instruction cache 114, a scheduler 116, a plurality of registers 118, a plurality of ALUs 120 and a burst instruction cache 122. As described above, in other examples, the burst instruction cache 122 may be omitted. The main processing part of the shader core 402 also comprises a fetch unit 416, a decoder 418, a dispatch and address calculation unit 420 (although this may be split into two units, a dispatch unit and an address calculation unit), an arbiter 422 and a higher-level cache 424 (e.g. a L2 cache). This higher-level cache 424 may be a higher-level instruction cache (i.e. at a higher level in a cache hierarchy than the instruction cache 114 and the BIC 122) or may be a higher-level combined data and instruction cache (again at a higher level in the cache hierarchy than the instruction cache 114 and the BIC 122). The arbiter 422 shares the higher-level instruction cache bandwidth between the main instruction stream (the instructions of which are stored in the instruction cache 113) and the burst instructions (which are stored in the BIC 122). In examples where the BIC 122 is omitted, the arbiter 422 is also omitted. It will be appreciated that the GPU 400, the shader core 402 and the sub-processor 404 may comprise other elements not shown in Figure 4 and that there may be other communication paths aside from those shown by arrows in Figure 4 (e.g. the scheduler 116 communicates with most of the elements within the main processing part of the shader core 402, but the arrows have been omitted from Figure 4 for reasons of clarity). In a variation on that shown in Figure 4, the BIC 122 may fetch instructions from the instruction cache 114, via the arbiter 422 (such that the arbiter 422 shares the instruction cache bandwidth between the main instruction stream and the burst instructions).

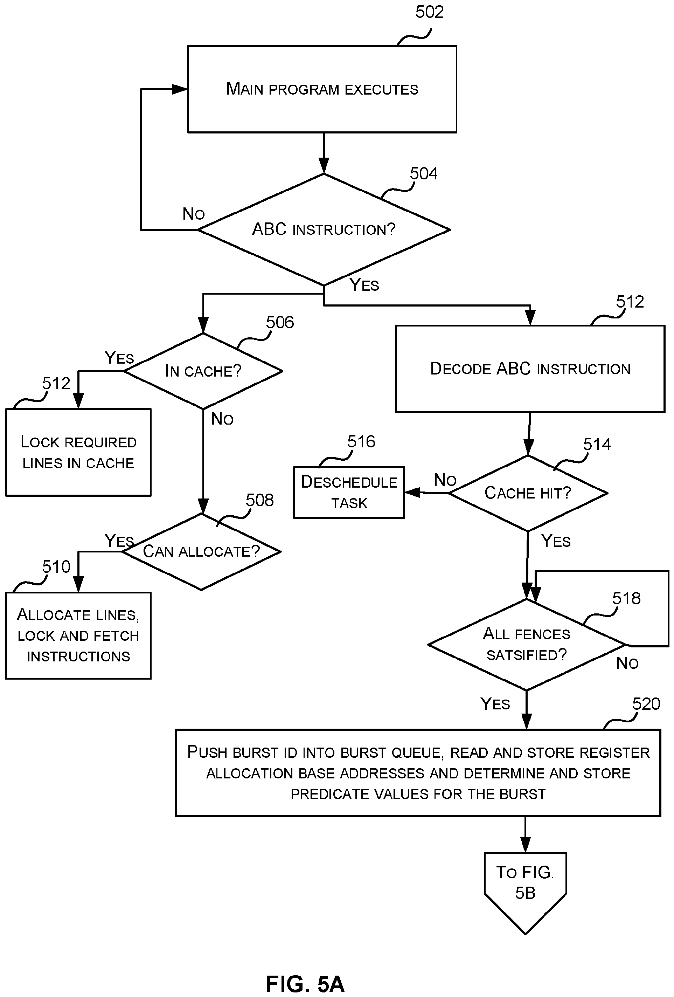

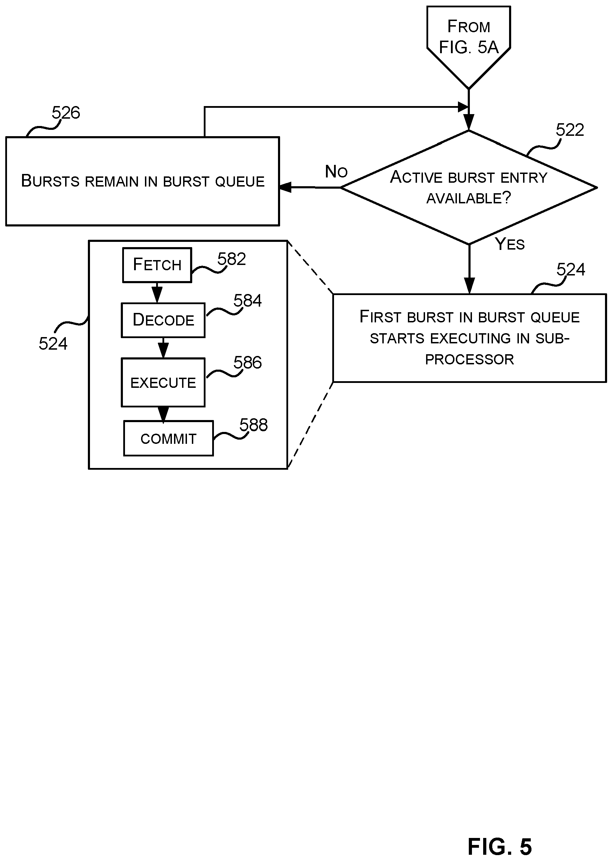

The operation of the GPU 400 can be described with reference to the flow diagram shown in Figures 5A and 5B. The modified program executes (block 502) and when an ABC instruction is fetched by the fetch unit 416 ('Yes' in block 504), the fetch unit 416 triggers a fetch of the burst instructions by the BIC 122 from the higher-level cache 424 via the arbiter 422. The fetching of the burst instructions by the BIC 122 uses information in the ABC instruction (e.g. in its header) that identifies the location of the instructions that form the burst (as described above). The BIC 122 uses the data from the ABC instruction (which has been provided to it by the fetch unit 416) to perform a lookup within the BIC to see whether the instructions are already in the BIC (block 506) and if they are not already in the cache ('No' in block 506), to check if there is available space in the BIC (block 508). If there is available space ('Yes' in block 508), the required number of cache lines in the BIC are allocated and locked and the fetch unit 416 fetches the burst instructions from the instruction cache 114 (block 510), but if there is insufficient available space ('No' in block 508), then no specific action is taken, but the task will be descheduled (in block 516) as described below. If, instead, the instructions are already in the BIC ('Yes' in block 506), the lines containing the instructions are locked (block 512). The locking of the cache lines (in blocks 510 and 512) prevents a deadlock situation occurring (e.g. where, after fetching all the instructions for a burst into the BIC, a cache line containing one of the instructions is evicted before the task can be rescheduled and so the task can potentially never be rescheduled) and also ensures that the instructions remain in the BIC 122 until they have been executed by the sub-processor 404 thereby avoiding a cache miss on the BIC 122 during execution of a burst.

In parallel, the remainder of the ABC instruction is decoded by the decoder 416 (block 512). If there is a cache miss on the BIC ('No' in block 514), the task that is executing the modified program is descheduled and its program counter is not updated (block 516). The scheduler 116 keeps track of the status of all instruction cache lines for both the main instruction cache 114 and the BIC 122 and which tasks are waiting on which cache lines. The task will be rescheduled (and hence the ABC instruction will be re-executed) once all the burst instructions come back from memory and are stored in the BIC 122 and all the burst's fences are satisfied.

The BIC 122 informs the dispatch and address calculation unit 420 when the instructions are locked in the BIC 122 and the decoder 416 informs the dispatch and address calculation unit 420 when all the burst's dependent fences are met, and once both have been confirmed ('Yes' in block 514 and 'Yes' in block 518), the ABC instruction is now fully processed. The burst is allocated an identifier, referred to herein as the burst ID, which is pushed into the burst queue 106 (block 520). Additionally, the modified program's register allocation base addresses that are inputs to the burst are read and stored and the predicate register values for burst are determined and stored by the dispatch and address calculation unit 420 (in block 520). The register allocation bases addresses are pointers to the physical storage for dynamically allocated registers that are read by the burst. No address translation is performed by the dispatch and address calculation unit 420 because any required address calculation (e.g. translation of base pointers to addresses) can instead be performed within the sub-processor 404 when instructions are executed (e.g. by the burst address calculation unit 410).

The predicate values for a burst that are stored (in block 520) are formed from the predicate values observed by the corresponding ABC instruction (i.e. the ABC instruction for the burst, as fetched in block 504). The ABC instruction is only executed if it passes a predicate test and it is the values used for the predicate test for the ABC instruction that are used to form the predicate values for the burst. The predicate values that have been determined and register IDs that have been read (in block 520) are stored in the burst information store 405 when the burst is pushed into the burst queue (in block 520) and are subsequently used when executing the burst. This means that the predicate values for the burst are now independent of the predicate values of the ABC instruction from which they were formed and these values may diverge over time (e.g. because a burst may update a predicate value for the main instruction stream when decrementing a fence). If the predicate values were instead not determined and stored at this time, there is a risk that the values of the predicate registers (not shown in Figure 4) observed by the main instruction stream change between the point at which the ABC instruction is executed and the time that the burst starts executing. This would result in incorrect predicate values being used when executing the burst.

In addition to storing predicate values for the burst and the register allocation base addresses allocated to the modified program but used as input to the burst instructions, the burst information store 405 may store additional information (which may be referred to as metadata for the burst), including details of the fences to be decremented by burst instructions and data identifying the end of a burst (e.g. the last DWORD in a burst). This information may be written to the burst information store 405 at the start of the burst (e.g. when the burst is committed in block 524). In other examples, some of the information listed above may be stored in other locations instead of the burst information store 405 (e.g. in the BIC 122). The burst information store 405 may also store additional information such as details of the cache lines (in the BIC 122) where the burst instructions are stored. By saving this cache line information it simplifies the reading of instructions out of the BIC 122 (e.g. it avoids having to perform any tag checks).

As described above, there are only a limited number of bursts which can be active at any time within the sub-processor and so the burst scheduler 108 comprises the same number of active burst entries as the maximum number of active bursts that are permitted. For example, a maximum of two active bursts may be permitted at any time within the sub-processor 404 and so the burst scheduler 108 comprises two active burst entries. In other examples, a different number of active bursts may be permitted (e.g. only one active burst, four active bursts or another number of active bursts which may, for example, be selected dependent upon the latency of the ALU pipelines within the sub-processor). When the burst is pushed into the burst queue (in block 520) there may already be an available active burst entry (because there are fewer than the maximum number of active bursts already active within the sub-processor) or there may be no available active burst entry (because the maximum number of bursts are already active within the sub-processor). When an active burst entry becomes available ('Yes' in block 522), the next burst in the burst queue 106 is popped into this entry, becomes an active burst and starts executing inside the sub-processor (block 524). Until an active burst entry becomes available, the bursts remain in the burst queue (block 526). ABRs 110 are only allocated to a burst when it becomes active (in block 524) and are not allocated to bursts that remain in the burst queue 106.

In the event that a burst is added to the burst queue (in block 520) and there is already an active burst entry available ('Yes' in block 522), the burst effectively bypasses the queue and can start execution immediately. This reduces latency (e.g. by one clock cycle).

Once a burst has been popped from the burst queue into an active burst entry (block 522), the scheduling of instructions between active bursts is controlled by the burst scheduler 108. The burst scheduler 108 may use a round-robin scheduling scheme or may otherwise manage interleaving of instructions from active bursts to permit forwarding from one instruction to the next in the same burst (via the forwarding paths 113) and to keep the ALUs 112 as fully occupied as possible, taking into consideration the latency in the ALU pipeline itself. Where interleaving is used, this improves the efficiency of the sub-processor. When scheduled, an instruction is fetched by the burst fetch unit 406 from the BIC 122 (block 582). As described above, because of the locking of cache lines within the BIC 122, a cache-hit is guaranteed. Once fetched (by the burst fetch unit 406), the burst instruction is decoded by the burst decoder 408 (block 584). The burst instruction is then executed by the ALUs 112 (block 586) using operands which may be obtained from a forwarding path 113 or read from the ABRs 110 or from the registers 118 outside the sub-processor 404 (using register addresses determined by the burst address calculator 410 by translating the stored register allocation base addresses from the burst information store 405) via the burst IOC 412. The burst IOC 412 is also used for writes of results from the ALU 112 to either or both the ABRs 110 and the registers 118, as described above. Writes to the registers 118 within the main processing part of the shader core 402 may occur to communicate with other pipelines, or between bursts, or in the event that there are insufficient ABRs 110 allocated to the active burst.

When executing a burst (in block 524), the burst scheduler 108 may not need to perform any dependency tracking within a burst because the compiler will have inserted any necessary stalls into the burst.

In order to minimise delays between the end of execution of one burst and the start of execution of the next burst, the BIC 122 may be aware of the number of instructions in each burst and when the last instruction data for a particular burst is read out from the BIC 122, the BIC 122 may decrement the lock count on the relevant cache lines and pre-emptively read the next burst ID from the front of the burst queue 106 in order to start reading the instruction data for that burst out to the sub-processor. This means that by the time the burst scheduler 108 schedules the first instruction in a new burst, that instruction has already been fetched by the burst fetch unit 406. The burst decoder 408 may also perform pre-emptive decoding (also called 'pre-decoding'). The decoded instructions are placed in a decoded instructions buffer (not shown in Figure 4) and so at any time there is space in the decoded instructions buffer, the burst decoder 408 may pre-emptively decode the next burst instruction. Where the burst scheduler 108 uses a round-robin scheme, the pre-emptive decoding may use a similar round-robin scheme to select a next instruction to pre-decode when there is space in the decoded instructions buffer.

At the end of a burst, the ABRs 110 that were allocated to that burst are invalidated.

During execution of a burst, the main processing part of the shader core may switch from executing the modified program to executing another task; however, this does not affect the scheduling and execution of the burst within the sub-processor. The decrementing of a fence within the burst (as described above) may enable the task corresponding to the modified program which issued the burst to be rescheduled and start executing again.

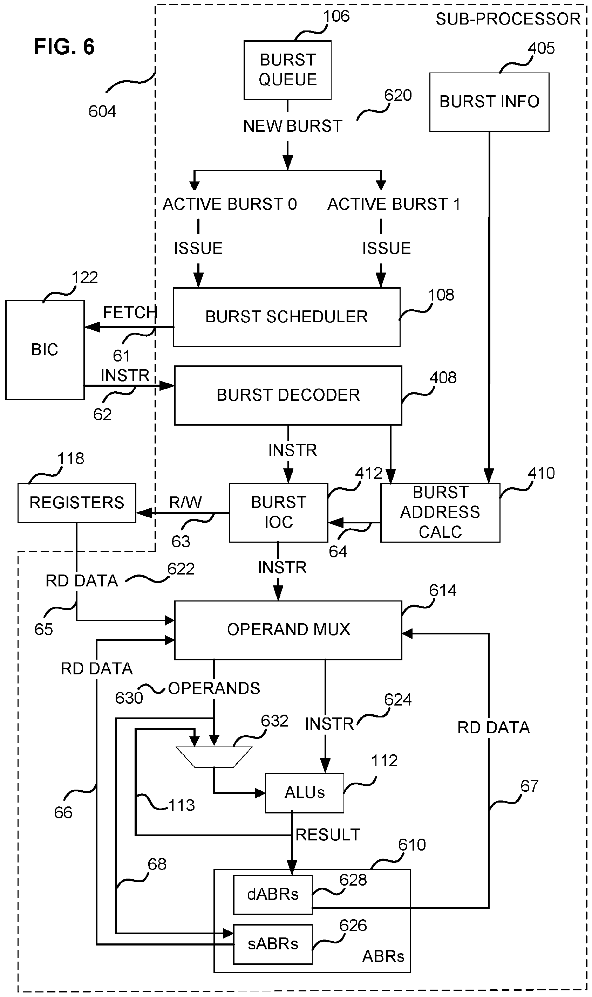

Figure 6 shows another example sub-processor 604 as described herein. The sub-processor 604 may be used in the GPUs 100, 400 shown in Figures 1 and 4 and described above. Figure 6 also shows two elements which are outside of the sub-processor 604 and instead are part of the main processing part of a shader core (such as shader core 102, 402 shown in Figures 1 and 4), the registers 118 and BIC 122. The sub-processor 604 shown in Figure 6 also is not shown as comprising a burst fetch unit 406, although this may be present. Figure 6 shows more detail about the operations that are performed within the sub-processor 604.

The sub-processor 604 can concurrently execute two active bursts at any time, active burst 0 and active burst 1. Consequently, the sub-processor 604 is a scalar, in-order, two-way, multi-threaded processor for the execution of bursts. Dependent upon the way that bursts are extracted, the bursts may, in some examples, be arithmetic bursts (i.e. bursts of arithmetic instructions). As described above, bursts are placed in the burst queue 106 when they are ready to be executed (as in block 520 of Figure 5A). When an active burst entry becomes available, the next burst 620 is popped from the burst queue 106 and begins execution (e.g. either as active burst 0 or active burst 1). The active bursts may be scheduled, by the burst scheduler 108, using a round-robin schedule, i.e. one instruction is scheduled per cycle, alternating between active bursts every cycle. The scheduled burst triggers fetch of its next instruction from the BIC 122 (arrows 61-62, as in block 582 of Figure 5B), which is then decoded by the burst decoder 408 (as in block 584 in Figure 5B). As described above, there may also be pre-emptive fetching, and in some examples also pre-emptive decoding of instructions at the end of a burst and/or in the middle of a burst. Instructions within a burst are executed strictly in order. This avoids write-after-write and write-after-read hazards as these cannot occur with in-order execution. As the latency is predictable, the scheduler can produce an optimised instruction ordering which obviates the need for out-of-order execution.

The burst IOC 412 arbitrates operand reads from the registers 118 in the main processing part of the shader core (arrow 63). This may use translated addresses provided by the burst address calculation unit 410 (arrow 64). Read data 622 is fed to the operand mux 614 (arrow 65) which may perform reads from the ABRs 610 (arrows 66-67) and routes the appropriate input data to the relevant source inputs of the ALUs 112, along with the decoded instruction 624.

As shown in Figure 6, the ABRs 610 may be split into two portions, referred to as source ABRs (sABRs) 626 and destination ABRs (dABRs) 628. The sABRs 626 store copies of sources for the ALUs 112 (i.e. copies of input data for the ALUs 112) and the dABRs 628 store results generated by the ALUs 112. Whilst the ABRs 112 are not shown partitioned in this way in Figures 1 and 4, they may be similarly partitioned into sABRs and dABRs. Each cycle, one or more of the operands 630 that are input to an ALU 112 may be cached in a sABR 626 for reuse in a subsequent instruction (arrow 68). The number of operands that may be cached in the sABRs 626 is dependent upon the number of write ports that are provided. By caching operands in this way, in particular operands that are read by the burst IOC 412 from the registers 118, it reduces the overall number of reads from outside the sub-processor 604 and hence reduces power, bandwidth usage and latency.

The ALUs 112, which may, for example, be either floating-point pipelines or integer dot product pipelines (e.g. 8-bit integer dot product pipelines), execute the instruction 624 and this may take two clock cycles (although in other examples the latency of the ALU pipelines may be different). The ALUs 112 have two output paths - one to the ABRs 610 and the other which is the forwarding path 113. The result may be written back to a dABR 628 and may additionally be written to the registers 118 outside the sub-processor 604. The result may also be forwarded to a subsequent instruction (e.g. to the next instruction in the burst) using a forwarding path 113 and a forwarding mux 632 which is positioned in front of (i.e. at the input to) the ALUs 112. Use of forwarding saves power (as it avoids a read from an ABR and possibly a write to this ABR). There may be some instructions where the latency of the ALU pipeline is longer than usual, e.g. where floating-point conversion is required, and in such cases forwarding may not be possible and instead the result must be written to and read from an ABR 610. As shown in Figure 6, read data can be fed to the operand mux 614 from both the sABRs 626 and the dABRs 628 and this enables a result that is written to a dABR 628 to be used as a source for a subsequent instruction. There may be a path between the sABRs 626 and dABRs 628 (via the operand mux 614) to enable results to be read out of dABRs 628 (arrow 67) and stored instead in sABRs 626 (arrow 68). This shuffling of data from a dABR to a sABR may, for example, be useful where the number of available dABRs 628 for a particular burst is less than the number of results generated by the burst or is insufficient for other reasons. This movement may be performed when the value stored in a dABR is used as a source by another instruction and/or it may be implemented by additional instructions (e.g. move instructions) inserted by the compiler (e.g. in block 306 of Figure 3). By freeing up dABR capacity in this way, it enables more efficient use of the ABRs.

As described above and shown in Figure 6, the ABRs 610 may be split into two portions, sABRs 626 and dABRs 628. The dABRs 628 can be written with the ALU output of an instruction and read by subsequent instructions (arrow 66). The sABRs 626 can be written with operand data loaded by an instruction (arrow 68), e.g. from the registers 118 in the main processing part of the shader core. This mitigates repeated energy intensive reads from larger register files (e.g. registers 118) where an operand may be reused within a burst. Partitioning the ABRs 610 in this way means that the individual banks of sABRs and dABRs do not need to be located together on the chip but can instead be best located for their function (e.g. to reduce any timing concerns associated with reads from and writes to the sABRs and/or dABRs). The sABRs and dABRs may be provided with different numbers of read and write ports, e.g. the dABRs may be provided with additional read ports compared to the sABRs. The read and write ports of the ABRs may be configured to allow arbitrary permutation of 16-bit vector elements, which facilitates moving or broadcasting F16 data between vector elements without needing additional instructions to implement this.

As a maximum for a single-issue implementation (i.e. where a single burst instruction can be issued per clock cycle, there may usefully be as many dABR write ports as results that can be produced by a single instruction in a burst, as many sABR write ports as sources that can be loaded by a single instruction in a burst, and as many dABR and sABR read ports as sources that can be loaded by a single instruction in a burst. These numbers may be multiplied up accordingly for multi-issue implementations. To optimise area and power, a reduced number of read and/or write ports may be provided, meaning that not all sources may be read from one or both types of ABR and/or fewer results may be written to ABRs. The read and write ports may be dedicated for a particular active burst or they may be shared between active bursts (e.g. to save area, particularly for a single-issue implementation).

The sABR write specified by an instruction is committed after the source reads for that instruction. This allows instructions to read the current value of an sABR before immediately overwriting it, effectively increasing sABR capacity. The ABRs 610 and more specifically the sABRs and dABRs are allocated by the compiler (e.g. in block 306 of Figure 3).

Pre-emptive copying of registers 118 to sABRs may be performed by using sources that are not currently being used by an operation to load register values and cache them in an sABR. This may be used, for example, to avoid conflicts in accessing the registers 118.

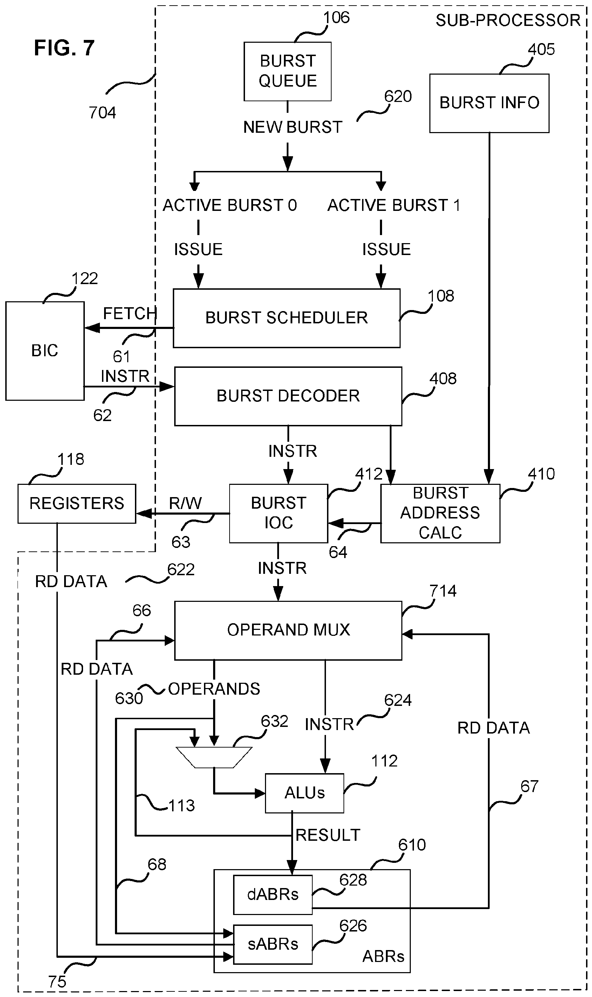

Figure 7 shows another example sub-processor 704 as described herein. The sub-processor 704 is a variation on that shown in Figure 6 and described above. As with the sub-processor 604 shown in Figure 6, the sub-processor 704 shown in Figure 7 may be used in the GPUs 100, 400 shown in Figures 1 and 4 and described above.

In the example shown in Figure 6, some of the operands for the instructions are received by the operand mux 614 from the registers 118 outside sub-processor 604 (i.e. read data 622 and arrow 65). In contrast, in the example shown in Figure 7, the read data 622 from the registers 118 is received by the sABRs (arrow 75). This means that all operands received by the operand mux 714 is received from the ABRs 610 (arrows 66-67). This avoids the need to have any flip-flop based storage in a pipeline stage between the operand mux 714 and the ALUs 112 (as may be present in the example described above with reference to Figure 6, although they are not shown in Figure 6) and this in turn reduces the overall power (by eliminating the pipeline stage).

Interleaving execution of two active bursts, as shown in Figures 6 and 7, provides thread-level parallelism (TLP) that can hide the latency of the execution (i.e. ALU) pipeline observed by each instruction. This allows consecutive instructions within a burst to use the forwarding path 113. This thread-level parallelism is combined with the instruction-level parallelism (ILP) which is a consequence of the extraction of burst instructions from a program and the combination may be referred to as burst level parallelism (BLP). The TLP, and hence the BLP, may be increased by adding more active bursts; however as each active burst requires a dedicated set of ABRs 610, there is a trade off between the increased performance achieved and the power and area cost of the additional ABRs. The number of active bursts may be selected so that it corresponds to the normal (e.g. median) latency of the ALU pipelines in order to maximise the opportunity for forwarding between successive instructions within a burst.

In the event that a sub-processor is operating with an empty active burst entry, it could potentially issue instructions from the same burst on successive clock cycles; however, as this removes the ability for forwarding, the sub-processor may be configured such that it continues to use the round-robin scheduling and does not issue instructions in the clock cycles that are allocated to empty active burst entries. This effectively caps the ALU utilisation but enables forwarding. It can be shown, however, that programs will generally have enough independent bursts to ensure that situations where there is an empty active burst entry that cannot immediately be filled from the burst queue will be very rare.

In the methods and hardware described herein there may be one unified block of ABRs that can be used to store sources or results (e.g. as shown in Figures 1 and 4), or there may be separate sABRs and dABRs (e.g. as shown in Figures 6 and 7), or there may be only one of sABRs and dABRs (e.g. only dABRs, this reduces the area but increases the power compared to having both).

In the examples described above, the forwarding opportunities are identified by the compiler and included in the burst instructions (e.g. by setting a corresponding forwarding bit in an instruction), although the hardware may determine that forwarding cannot occur because of a stall. In other examples, the hardware (e.g. the sub-processor) may identify the forwarding opportunities, e.g. by saving the dABR address of the previous instruction and comparing it to any dABR addresses of the sources for the next instruction, and trigger the forwarding by the ALU (i.e. trigger the reading from the forwarding path instead of the dABR).

Although in the examples described above, the burst scheduler 108 issues a single instruction per cycle and uses a round-robin scheduling scheme. In variations on the methods described above, the burst scheduler 108 may issue multiple instructions per cycle and/or may use a different scheduling scheme. In the examples described above, instructions within a burst are issued strictly in order; however, in other examples instructions may be issued out-of-order within a burst. Where instructions may be issued out-of-order, the sub-processor may additionally comprise hazard detection hardware logic that compares source and destination register addresses to identify hazards. Alternatively, the hazard detection may be implemented partially in software, with the compiler setting bits in the burst instructions (e.g. in block 364) to indicate how instructions may be issued out of order whilst avoiding hazards.

In some examples, the sub-processor may support only instructions running at full throughput and in other examples, the sub-processor may support instructions running at a reduced rate, issued over multiple cycles. In such examples, the burst scheduler 108 may modify the scheduling scheme, e.g. by skipping over active bursts that target the same ALUs as the reduced rate instruction whilst the ALU is busy executing the reduced-rate (and hence multi-cycle) instruction. In other examples, each active burst may have a dedicated lower-rate set of ALUs within the sub-processor which are used to execute the reduced rate (and hence multi-cycle) instructions. This means that the scheduling of other active bursts is not affected by the scheduling of a reduced-rate instruction for an active burst. The return data for multi-cycle instructions may be written to dABRs and/or sABRs (or more generally to ABRs) depending upon the implementation. They may either have dedicated write ports or reuse existing ones. Where they reuse existing write ports, this is taken into consideration by the compiler when determining how to avoid hazards (in block 364) and the scheduler may modify its scheduling scheme to avoid scheduling an instruction that will use the same write port on the same cycle as the returning multi-cycle instruction.

The methods described herein aim to minimise the hardware cost of scheduling within the sub-processor and instead transfer much of the scheduling load onto the compiler, as described above with reference to Figure 3. By keeping the hardware scheduling behaviour predictable within the sub-processor (e.g. through the use of a round-robin scheduling scheme or other pre-defined and predictable scheduling scheme), it enables the compiler to determine an optimum ordering of instructions within a burst.

Using the methods and hardware described herein, once started each burst is executed to completion atomically (i.e. without suspension). The sub-processor provides ephemeral storage for arithmetic results in the form of ABRs 110 that may be used by active bursts only. This provides both power and area efficiencies. The use of forwarding paths (as described above) results in reduced bandwidth to the SRAM-based registers 118 in the shader core and improved power efficiency. Using the methods described herein, and depending upon the particular implementation, a significant reduction in reads of the SRAM based registers 118 in the main processing part of the shader core 102, 402 may be achieved.

The methods and hardware described herein significantly improve the performance per Watt and may also improve the performance per square millimetre of the GPU. The performance improvements include one or more of: reduced ALU pipeline latency (with and without forwarding) which reduces the need for latency hiding, increased ability to exploit instruction-level parallelism which drives increased ALU utilisation, and lower bandwidth to the SRAM based registers in the main processing part of the shader core which mitigates bank clashes and reduces the occurrence of stalls. Power savings are achieved through various mechanisms including the reduction in accesses to the SRAM based registers and the use of forwarding.

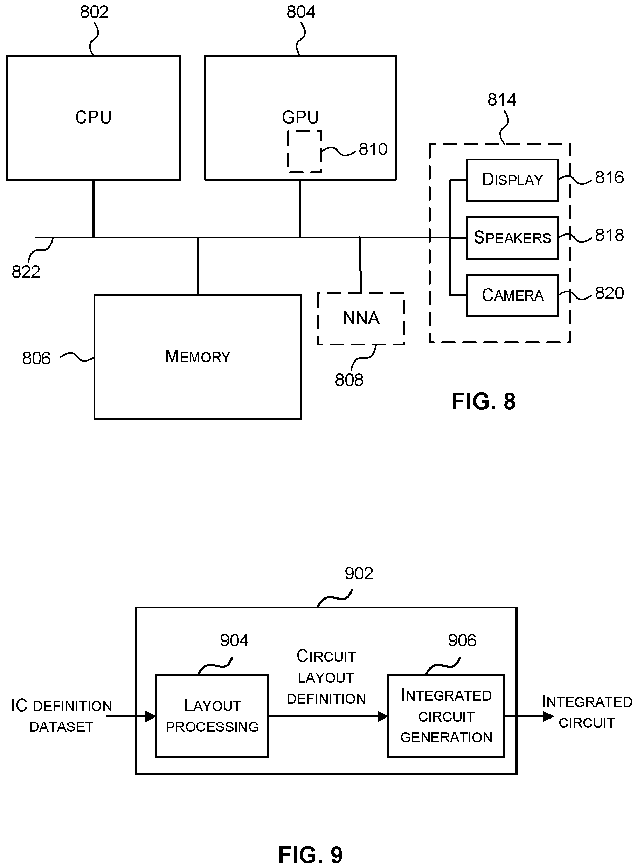

Figure 8 shows a computer system in which the GPUs described herein may be implemented. The computer system comprises a CPU 802, a GPU 804 and a memory 806. The computer system may also comprise a neural network accelerator (NNA) 808 and other devices 814, such as a display 816, speakers 818 and a camera 822. The GPU may comprise one or more sub-processors 810, as described herein, within a shader core. In another example, the GPU may not comprise a sub-processor 810, and instead the computer system shown in Figure 8 may be configured to compile the program (using compiler executable instructions stored in memory 806), as described above with reference to Figure 3, in order to generate the modified program and the burst. In other examples, one or more of the depicted components may be omitted from the system. The components of the computer system can communicate with each other via a communications bus 822.

The GPUs of Figures 1, 4, 6 and 7 are shown as comprising a number of functional blocks. This is schematic only and is not intended to define a strict division between different logic elements of such entities. For example, whilst elements are shown logically as part of the sub-processor, they do not necessarily need to be physically co-located within the GPU. Each functional block may be provided in any suitable manner. It is to be understood that intermediate values described herein as being formed by an element within a GPU need not be physically generated by the GPU at any point and may merely represent logical values which conveniently describe the processing performed by the GPU between its input and output.

The GPUs described herein may be embodied in hardware on an integrated circuit. The GPUs described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a GPU will now be described with respect to Figure 9.

Figure 9 shows an example of an integrated circuit (IC) manufacturing system 902 which is configured to manufacture a GPU as described in any of the examples herein. In particular, the IC manufacturing system 902 comprises a layout processing system 904 and an integrated circuit generation system 906. The IC manufacturing system 902 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 902 to manufacture an integrated circuit embodying a GPU as described in any of the examples herein.

The layout processing system 904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 904 has determined the circuit layout it may output a circuit layout definition to the IC generation system 906. A circuit layout definition may be, for example, a circuit layout description.

The IC generation system 906 generates an IC according to the circuit layout definition, as is known in the art. For example, the IC generation system 906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 906 can use to form a suitable mask for use in generating an IC.

The different processes performed by the IC manufacturing system 902 may be implemented all in one location, e.g. by one party. Alternatively, the IC manufacturing system 902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 9, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method of compiling a program comprising:
analysing a program to identify at least one group of instructions within the program that do not have any external dependencies which need resolving during execution of the instructions in the group (302);
in response to identifying a group of instructions that do not have any external dependencies which need resolving during execution of the instructions in the group (304), extracting the group of instructions from the program to form a burst (306, 361);
creating a modified program by inserting an instruction into the program in place of the extracted group of instructions, wherein the instruction is configured to trigger execution of the burst (308); and
saving the burst and the modified program separately.

2. The method according to claim 1, wherein the identified group of instructions that do not have any external dependencies which need resolving during execution of the instructions in the group comprises a group of interdependent instructions.

3. The method according to claim 1 or 2, further comprising:
identifying a hazard within the burst using known latencies for each instruction (362); and
reordering instructions within the burst to mitigate the hazard (364).

4. The method according to any of the preceding claims, further comprising:
identifying a hazard within the burst using known latencies for each instruction (362); and
inserting one or more stalls into the burst to mitigate the identified hazard (364).

5. The method according to any of the preceding claims, further comprising:
identifying a forwarding opportunity between two successive instructions in the burst (364); and
modifying a second of the two successive instructions to indicate that a source operand is available via a forwarding path (365).

6. The method according to claim 5, wherein modifying a second of the two successive instructions to indicate that a source operand is available via a forwarding path comprises:
setting a forwarding bit for the source operand within the second of the two successive instructions.

7. The method according to claim 5 or 6, further comprising:
reordering instructions within the burst to maximise forwarding opportunities.

8. The method according to any of the preceding claims, further comprising:
specifying, in the instruction that is inserted into the modified program, a fence counter that is incremented prior to execution of the burst, the fence counter corresponding to a data fence; and
modifying an instruction within the burst to decrement the fence counter.

9. The method according to claim 8, wherein the instruction within the burst that is modified to decrement the fence counter is not a last instruction within the burst.

10. The method according to any of the preceding claims, further comprising:
merging two independent groups of interdependent instructions into a single burst.

11. The method according to any of the preceding claims, further comprising:
setting one or more control bits in the instruction that is inserted into the modified program, wherein the control bits are arranged to control arithmetic behaviour of a sub-processor when executing the burst.

12. A computer program comprising instructions which, when the program is executed by a computer, cause the computer to carry out the method of any of claims 1-11.

13. A computer readable storage medium having stored thereon the computer program of claim 12.

14. A computer system for compiling a program to form a burst and a modified program, the computer system comprising:
a processor (802); and
a memory (806) arranged to store computer executable instructions that, when executed, cause the computer system to execute the method of any of claims 1-11.
